# FASCICULE DE BREVET EUROPEEN

(11) **EP 2 867 007 B1**
(45) Date de publication et mention de la délivrance du brevet: **31.08.2016**
(21) Numéro de dépôt: 13729380.9
(22) Date de dépôt: 18.06.2013
(51) Int. Cl.: B29D 30/46

(54) **DISPOSITIF DE COUPE ET DE TRANSFERT D'UNE BANDE DE MATÉRIAU DESTINÉE À L'ASSEMBLAGE D'UN PNEUMATIQUE**
VORRICHTUNG ZUM SCHNEIDEN UND ÜBERTRAGEN EINER MATERIALBAHN ZUM ZUSAMMENBAU EINES REIFENS
DEVICE FOR CUTTING AND TRANSFERRING A STRIP OF MATERIAL FOR THE ASSEMBLY OF A TIRE

(30) Priorité: 22.06.2012 FR 1255900
(43) Date de publication de la demande: 06.05.2015
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: DEBOEUF, Michel, F-63040 Clermont-Ferrand Cedex 9 (FR); DUCROS, Thierry, F-63040 Clermont-Ferrand Cedex 9 (FR); RAVAT, Stéphane, F-63040 Clermont-Ferrand Cedex 9 (FR); ROUBY, Mickaël, F-63040 Clermont-Ferrand Cedex 9 (FR)
(74) Mandataire: Noel, Luminita
(86) Numéro de dépôt international: PCT/EP2013/062609
(87) Numéro de publication internationale: WO 2013/189922

(56) Documents cités:
- EP-A1- 0 561 609
- EP-A1- 2 431 164
- EP-A2- 0 518 691
- US-A- 5 248 374
- US-A1- 2010 095 814

## Description

L'invention concerne le domaine de la fabrication des pneumatiques, et plus particulièrement la phase au cours de laquelle on assemble des composants profilés sur une surface de réception rotative.

Plus particulièrement, l'invention s'intéresse au dispositif de coupe et de transfert d'une bande de profilé depuis un moyen de prélèvement et de mise à longueur d'un tronçon de bande dans une bande continue, jusqu'à la dépose complète de ce tronçon de bande sur une surface de réception généralement rotative.

Les dispositifs de coupe et de mise à longueur sont largement répandus dans l'industrie du pneumatique et sont connus sous le nom de serviceur. Ils font souvent partie intégrante du dispositif d'assemblage, et collaborent avec une ou plusieurs surfaces de réception en face desquelles ils sont disposés à un instant précis du cycle d'assemblage.

L'outil de coupe placé en amont du serviceur permet de détacher un tronçon de bande d'une bande continue alimentant le dispositif d'assemblage. Ce tronçon de bande peut être formé d'un profilé en caoutchouc, d'un élément de renfort lui-même composé de fils de renfort textiles ou métalliques enrobés dans du caoutchouc et disposés parallèlement entre eux en faisant un angle donné avec la direction longitudinale du tronçon de bande, ou encore d'un pre-assemblage d'un profilé en caoutchouc avec une bande de renfort.

Le problème rencontré par l'homme de l'art consiste à maitriser la déformation des fronts avant et arrière du tronçon de bande, déformations qui apparaissent au moment de la coupe lorsque les tensions élastiques sont libérées.

De nombreux dispositifs ont été proposés pour corriger ces déformations de manière à ce que les fronts avant et arrière aient des profils susceptibles d'être mis en joint lorsque l'on procède à l'opération d'assemblage des deux fronts sur la surface de réception.

Ainsi, parmi les éléments de l'art antérieur les plus notables, la publication US 4 769 104 propose de réaligner les fronts à l'aide de palettes orientables. La publication EP 649 730 ou encore la publication EP 1 447 210 propose de mesurer les déformations du front avant et d'adapter la déformation du front arrière en conséquence en modulant la vitesse de transfert entre des tapis de lancement ou en agissant directement sur le front arrière à l'aide de préhenseurs orientables.

Les publications EP 561609 - A et US 5248374 - A proposent des dispositifs de coupe et de transfert d'un tronçon de bande en caoutchouc dans le domaine de la fabrication des pneumatiques, dans le quels la bande en caoutchouc coupée est transférée par des préhenseurs du front avant et arrière du tronçon de bande et/ou par des tapis roulants.

Les documents EP 518691 - A et EP 2431164 - A proposent des améliorations de ces dispositifs dans le but d'éviter les déformations des extrémités avant et arrière des tronçons de bande pendant le transfert.

Le document US 2010/0095814 - A décrit un tapis de transfert télescopique utilisé dans le même domaine de la fabrication des pneumatiques.

Toutes ces publications ont donc pour objet d'intervenir sur le profil des fronts après avoir détaché le tronçon de bande et libéré les contraintes élastiques.

On observe néanmoins que les caractéristiques géométriques des produits avant la coupe, en particulier lorsqu'on considère des produits contenant des fils de renfort, sont relativement maitrisées et conformes aux tolérances requises. En d'autres termes les contraintes élastiques dont il est question ci-dessus sont bloquées dans le produit qui reste stable tant qu'il n'est pas coupé.

Aussi, il a été considéré comme avantageux de définir un dispositif et un procédé permettant de maintenir en position les fronts avant et arrière depuis l'étape de coupe jusqu'à la dépose finale du tronçon de bande sur la surface de réception, et de maintenir la position de ces fronts pendant toute l'étape de transfert depuis le dispositif de coupe jusqu'au tambour d'assemblage en accompagnant le tronçon de bande à l'aide de dispositifs de maintien adaptés.

Le dispositif de coupe et de transfert selon l'invention comme défini dans la revendication 1, est destiné à prélever des tronçons de bande dans une bande continue, comprenant une première et une seconde face, en vue de les déposer sur une surface de réception rotative sur laquelle sont assemblés les divers composants formant un pneumatique.

Ce dispositif comprend :
- un moyen de coupe, comprenant une lame de coupe, apte à séparer ledit tronçon de la bande continue selon une ligne de coupe,
- un tapis de transfert, télescopique, disposé selon une direction longitudinale entre les moyens de coupe et la surface de réception, et destiné à recevoir le tronçon de bande par sa première face,
- une première demi-enclume, disposée en amont de la ligne de coupe, et disposant de moyens de maintien aptes à saisir la bande par une première face,
- un transporteur, disposant de moyens de maintien aptes à saisir le front avant du tronçon de bande par une deuxième face, ledit transporteur étant entrainé en translation dans la direction longitudinale.

Ce dispositif se caractérise en ce qu'il comprend une seconde demi-enclume, destinée à collaborer avec la première demi-enclume, disposée en aval de la ligne de coupe et en amont du tapis de transfert, comportant des moyens de maintien aptes à saisir le font arrière du tronçon de bande par ladite première face, et entrainée en translation dans la direction longitudinale.

Pendant la coupe, la première demi-enclume maintient la partie de la bande destinée, après la coupe, à devenir le front avant de la bande, et la seconde demi-enclume maintient la partie de la bande destinée, après la coupe, à devenir le front arrière du tronçon de bande mis à longueur. Le front avant de la bande, destiné à devenir le front avant du tronçon de bande après la coupe, est maintenu par le transporteur.

Après avoir détaché le tronçon de bande, le tapis de transfert déplace le tronçon de bande de manière synchrone avec le transporteur qui maintient le front avant du tronçon de bande, ainsi qu'avec la seconde demi-enclume qui maintient le front arrière du tronçon de bande et dont le mouvement entraine le repli télescopique du tapis de transfert. La vitesse de translation du tapis est ajustée pour être également synchrone avec la vitesse circonférentielle de la surface de réception. Le transporteur dépose alors le front avant sur la surface de réception en rotation. Pendant ce transfert, le front arrière reste maintenu par la seconde demi-enclume jusqu'à ce que le transporteur vienne saisir le dit front arrière pour le déposer à son tour sur la surface de réception.

Il en résulte que les fronts avant et arrière du tronçon de bande sont maintenus dans la position dans laquelle ils sont disposés l'un par rapport à l'autre dans la bande continue, pendant l'ensemble des étapes allant de l'étape de coupe au cours de laquelle on prélève un tronçon de bande jusqu'à la dépose complète dudit tronçon de bande sur la surface de réception.

Des formes préférentielles du dispositif selon la revendication 1, sont définies dans les revendications dépendantes 2 à 7.

La présente invention se réfère aussi à un procédé de coupe et de transfert d'un tronçon de bande comme défini dans la revendication 8, dans lequel procédé on utilise un dispositif selon l'une des revendications 1 à 7.

Une forme préférentielle dudit procédé est définie dans la revendication dépendante 9.

La description qui suit s'appuie sur les figures 1 à 6 dans lesquelles:
- la figure 1 représente une vue schématique en perspective d'un dispositif de coupe et de transfert selon l'invention,
- la figure 2 représente une vue schématique en perspective de la table de support télescopique du tapis de transfert télescopique,
- la figure 3 représente une vue schématique du dispositif selon l'invention dans ses deux positions extrémales,
- les figures 4, 5 et 6 représentent des vues schématiques en perspective du dispositif aux principales étapes du procédé de sa mise en oeuvre.

Comme indiqué, les figures sont schématiques en particulier les longueurs des tronçons semblent varier d'une figure à l'autre. Ceci est dû au choix de représenter le plus clairement possible le dispositif selon l'invention sans systématiquement respecter l'échelle ou les proportions.

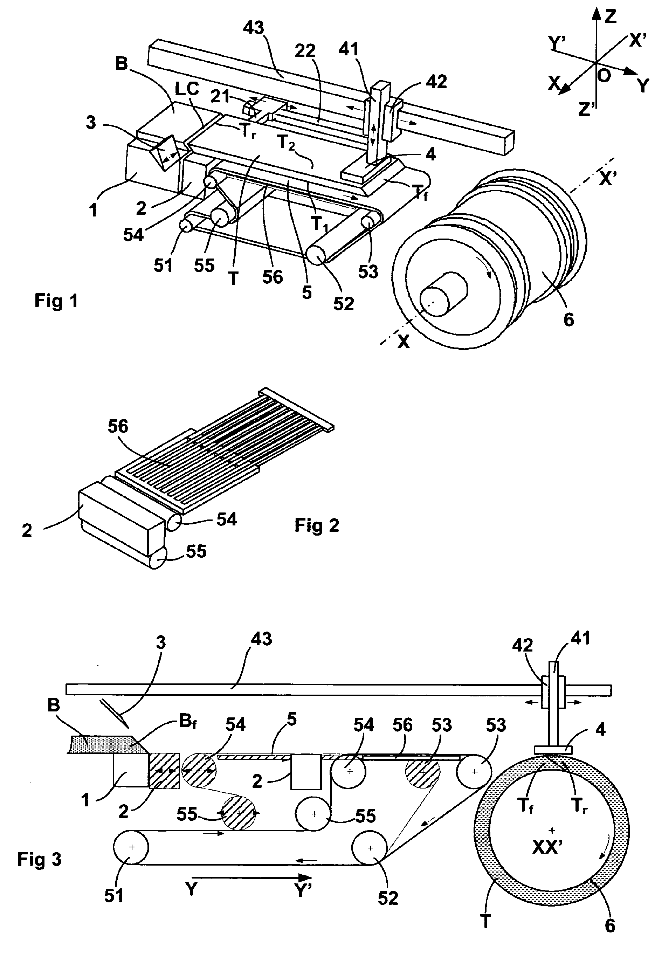

Le dispositif selon l'invention représenté à la figure 1 comprend une surface de réception 6, composée dans le cas présent d'un cylindre en rotation autour d'un axe XX'.

En amont de la surface de réception est disposé le dispositif de coupe et de transfert selon l'invention qui comprend, en allant vers l'aval du dispositif, une première demi-enclume 1, une seconde demi-enclume 2, un moyen de coupe 3, un tapis de transfert télescopique 5 et un transporteur 4.

La bande continue B provient d'un moyen d'alimentation (non représenté) situé en amont du dispositif de coupe et de transfert.

La première demi-enclume 1, disposée en amont du dispositif, est fixe. La première demi-enclume 1 comprend des moyens de maintien aptes à saisir la bande en la tenant par sa première face T₁, ici la face inférieure.

La seconde demi-enclume 2 est disposée juste en aval de la première demi-enclume 1, et comprend également des moyens de maintien aptes à saisir la bande ou le tronçon de bande par sa première face T₁. La seconde demi-enclume 2 est portée par un chariot 21 se translatant sur un rail 22 selon un axe longitudinal YY'. Le chariot 21 est motorisé par des moyens (non représentés) aptes à assurer les mouvements de la seconde demi-enclume en fonction des étapes du procédé de mise en oeuvre du dispositif.

Au droit de la limite aval de la première demi-enclume 1 est placé un moyen de coupe 3, formé d'une lame apte à sectionner la bande B selon une ligne de coupe LC.

Lors du sectionnement de la bande, on positionne la seconde demi-enclume 2 en appui contre la première demi-enclume 1 pour former une enclume complète sur laquelle la bande est en appui pour soutenir les efforts de la lame de coupe sans déformations.

Dans l'étape qui précède l'activation de la lame 3, on active les moyens de maintien de chacune des demi-enclumes 1 et 2, de manière à bloquer tout déplacement de la bande pendant la coupe proprement dite.

La lame de coupe circule en suivant sensiblement la ligne de contact entre les deux demi-enclumes de sorte que, après le passage de la lame, le front avant de la bande et le front arrière du tronçon de bande restent maintenus dans la position correspondant à celle qu'ils avaient dans la bande avant la coupe.

Il va de soi que lorsque la ligne de coupe LC forme un angle donné inférieur à 90° avec la direction longitudinale Y'Y, les limites aval de la première demi-enclume 1 et amont de la seconde demi-enclume 2 doivent former le même angle avec la direction longitudinale.

Un transporteur 4, monté sur un mat 41, est porté par un chariot 42 circulant le long de l'axe YY' sur un rail 43. Le mat 41 est mobile dans une direction ZZ' perpendiculaire aux axes XX' et YY'. De manière similaire aux deux demi-enclumes, le transporteur comprend des moyens aptes à saisir et à maintenir la bande ou le tronçon de bande par sa seconde face T₂. Sous l'action d'un moteur (non représenté), le transporteur navigue entre une position située sensiblement au-dessus de la première demi-enclume, et une position située sensiblement au-dessus de la surface de réception, de manière à venir saisir les fronts du tronçon de bande chacun à tour de rôle, et à les maintenir jusqu'à la dépose complète du tronçon de bande sur la surface de réception. Le mouvement de monte et baisse du mat 41, commandé par un moteur (non représenté), permet de faciliter les mouvements longitudinaux du transporteur lorsqu'il doit saisir un des fronts du tronçon de bande ou lorsqu'il doit les déposer sur la surface de réception.

Les moyens de maintien équipant les demi-enclumes 1 et 2, ou le transporteur 4, sont adaptés au type de produit formant la bande. On pourra avantageusement utiliser des moyens électromagnétiques ou à aimantation pilotée lorsque la bande continue contient des renforts métalliques et, lorsque ce n'est pas le cas des moyens de maintien par dépression connectés à une centrale à vide.

Un tapis de transfert télescopique 5, est disposé entre l'outil de coupe et la surface de réception. Dans le cas de l'exemple servant de support à la présente description, ce tapis de transfert est formé d'une bande transporteuse circulant entre des rouleaux 51, 52, 53, 54, 55 dont les axes sont parallèles à l'axe XX'. La bande ou le tronçon de bande repose par sa première face T₁, sur la surface du tapis de transfert disposée entre les rouleaux 53 et 54.

Les rouleaux 54 et 55 sont mobiles dans la direction longitudinale YY', et peuvent utilement être portés par le charriot 21 qui supporte la seconde demi-enclume 2. De même, le rouleau 53 peut lui aussi être approché de la surface de réception en se déplaçant dans la direction longitudinale. Ce montage permet de déplacer longitudinalement la seconde demi-enclume 2 qui jouxte la partie amont du tapis de transfert, en faisant avancer simultanément les rouleaux 54 et 55 et en réduisant la surface supportant la bande, tout en maintenant la bande transporteuse en tension.

Une table support télescopique, illustrée à la figure 2, est disposée sous la surface de la bande transporteuse entre les rouleaux 53 et 54 dans le but de compenser les effets de la gravité s'exerçant sur la bande de produit B soutenue par le tapis de transfert télescopique.

La figure 3 permet de visualiser les positions respectives des différents rouleaux 53, 54 et 55 en relation avec le mouvement de la seconde demi-enclume 2 qui est mobile entre une position dans laquelle les deux demi-enclume 1 et 2 sont en contact l'une de l'autre (position représentée hachurée), et une position dans laquelle elle jouxte la partie amont du tapis de transfert télescopique 5 en position rétractée (position représentée non hachurée).

Pour permettre un pilotage précis des mouvements des rouleaux et de la seconde demi-enclume, ainsi que la rotation de la surface de réception, il est avantageux de prévoir des organes de motorisation facilement indexables, du type moteur pas à pas par exemple, et pilotables par un organe central, de manière à assurer que ces différents mouvements sont synchrones et coordonnés.

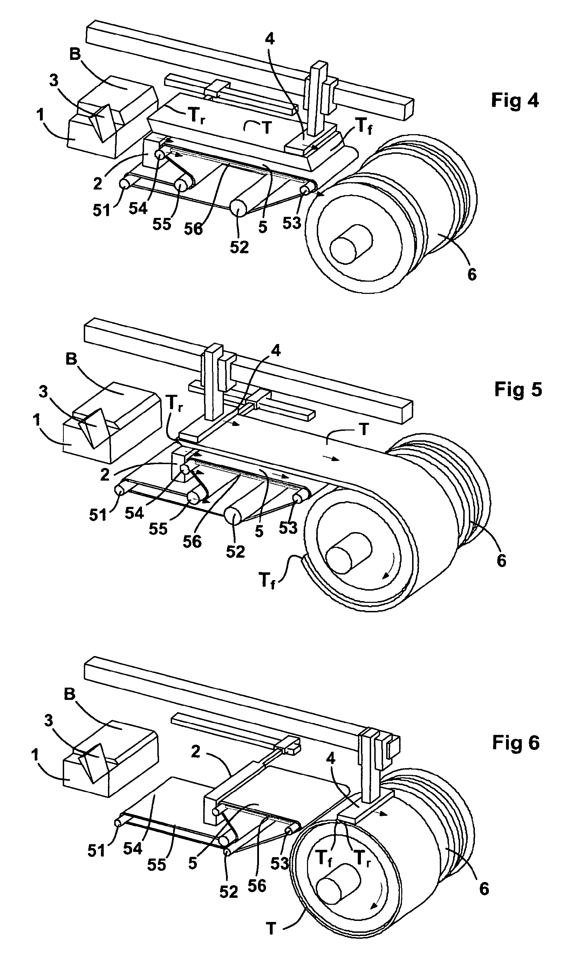

Les figures 4, 5 et 6 permettent de visualiser les différentes positions du dispositif de coupe et de transfert lors d'un cycle de fabrication.

Pour débuter le cycle, on amène les deux demi-enclumes 1 et 2 en contact l'une avec l'autre et on ramène la surface porteuse du tapis télescopique à sa longueur maximale de sorte que la partie amont dudit tapis de transfert jouxte la partie aval de la seconde demi-enclume 2.

Le front avant de la bande est maintenue par sa première face T₁ en position à l'aide des moyens de maintien de la première demi-enclume. On positionne alors le transporteur 4 au-dessus de la première demi-enclume, et on saisit le front avant T_{f} de la bande continue B par sa seconde face T₂, ici sa face supérieure. On libère alors les moyens de saisie de la première demi-enclume 1 tenant le front avant T_{f} de la bande continue.

Tout en maintenant le front avant T_{f} de la bande à l'aide du transporteur 4, on déroule la bande continue dans le sens longitudinal sur une longueur déterminée et on la dépose sur la surface porteuse du tapis télescopique, tout en faisant progresser le transporteur et le tapis télescopique de manière synchrone à la même vitesse linéaire.

Une fois la mise à longueur du tronçon de bande réalisé, on saisit la première face de la bande à l'aide des deux demi-enclumes 1 et 2.

On active alors les moyens de coupe de manière à découper la bande selon la ligne de coupe LC, pour libérer un tronçon de bande. On observera que le front avant de la bande B correspond au front avant T_{f} du tronçon de bande suivant.

On fait alors progresser le tronçon de bande sur le tapis télescopique en faisant avancer simultanément la seconde demi-enclume 2 qui maintient le front arrière Tᵣ dudit tronçon de bande, et le transporteur 4 qui maintient le front avant T_{f}, comme cela est illustré à la figure 4.

Pendant toutes ces manoeuvres, on fait progresser de manière synchrone l'avance du tapis de transfert, de la seconde demi-enclume tout en réduisant la longueur de la surface porteuse du tapis télescopique en réduisant l'espace entre les rouleaux 53 et 54, de sorte que le tronçon de bande ne subisse aucune tension susceptible d'en modifier la longueur.

A l'instant requis du cycle d'assemblage, on fait avancer la tête du tapis de transfert 5 vers la surface de réception 6.

Puis, à l'aide du transporteur 4, on approche le front avant T_{f} dudit tronçon T de la surface de réception 6, et on dépose ledit front avant T_{f} sur la surface de réception. Une fois le front avant T_{f} ancré sur la surface de réception 6, on libère les moyens de maitien du transporteur.

On enroule le tronçon de bande T autour de la surface de réception 6.

Après avoir libéré le transporteur 4, on ramène ledit transporteur à la hauteur du front arrière Tᵣ dudit tronçon T, et on saisit le front arrière Tᵣ du tronçon de bande T par sa seconde face T₂, ce qui permet de libérer les moyens de maintien de la seconde demi-enclume qui avaient maintenus ledit front arrière jusqu'à cette étape, comme cela est illustré à la figure 5.

Le mouvement du transporteur depuis la position dans laquelle il libère le front avant jusqu'à la position dans laquelle il saisit le front arrière peut se faire en temps masqué, tout en poursuivant l'enroulement du tronçon de bande autour de la surface de réception. De même, la saisie du front arrière Tᵣ peut également s'opérer à la volée, pour autant que l'on agisse de manière appropriée sur les moteurs commandant l'avance du charriot 42.

Et tout en poursuivant la dépose du tronçon de bande sur la surface de réception, on dépose le front arrière du tronçon de bande T sur la surface de réception 6, comme cela est illustré à la figure 6.

Une fois la surface du tapis télescopique libérée, on ramène la seconde demi-enclume 2 au contact de la première demi-enclume 1, ainsi que les rouleaux 54 et 55 dans la position conférant au tapis télescopique son extension maximale.

Et, une fois l'ancrage du front arrière Tᵣ assuré, on libère les moyens de maintien du transporteur, et on ramène ce dernier au-dessus de la première enclume et du front avant de la bande afin de recommencer un nouveau cycle.

Ces deux dernières opérations peuvent bien sûr être opérées simultanément.

On observera que, pendant toutes ces étapes de coupe et de transfert, les fronts avant sont maintenus en position soit par l'une ou l'autre des demi-enclumes, soit par le transporteur, et ne sont libérés qu'après avoir été ancrés fermement sur la surface de réception 6. Ceci permet de ne pas modifier la géométrie des fronts avant et arrière qui se raccordent alors parfaitement l'un à l'autre lors de la fermeture du joint final.

On observera également que ce dispositif est tout à fait apte à prendre en compte les algorithmes de pilotage utilisés pour poser les produits en tension, mais qui ne font pas l'objet de la présente invention.

## Revendications

1. Dispositif de coupe et de transfert d'un tronçon de bande (T) prélevé dans une bande continue (B), comprenant une première (T₁) et une seconde (T₂) face, et destiné à être déposé sur une surface de réception rotative (6) sur laquelle sont assemblés les divers composants formant un pneumatique, comprenant
- un moyen de coupe (3), apte à séparer ledit tronçon de la bande continue selon une ligne de coupe (LC),
- un tapis de transfert (5) télescopique, disposé selon une direction longitudinale (Y'Y) entre les moyens de coupe et la surface de réception, et destiné à recevoir le tronçon de bande par sa première face (T₁),
- une première demi-enclume (1), disposée en amont de la ligne de coupe (LC), et comportant des moyens de maintien aptes à saisir la bande par sa première face (T₁),
- un transporteur (4), disposant de moyens de maintien aptes à saisir le front avant (T_{f}) ou arrière (Tᵣ) du tronçon de bande (T) par la deuxième face (T₂), ledit transporteur (4) étant entrainé en translation dans la direction longitudinale (Y'Y),
**caractérisé en ce qu'**il comprend une seconde demi-enclume (2) destinée à collaborer avec la première demi-enclume (1) pendant la découpe de la bande, disposée en aval de la ligne de coupe (LC) et en amont du tapis de transfert télescopique (5), comportant des moyens de maintien aptes à saisir le font arrière (Tᵣ) du tronçon de bande par ladite première face (T₁), et entraînée en translation dans la direction longitudinale (Y'Y).

2. Dispositif de coupe et de transfert selon la revendication 1, dans lequel la seconde demi-enclume (2) est mobile entre une position dans laquelle les deux demi-enclume (1 et 2) sont en contact l'une de l'autre, et une position dans laquelle la seconde demi-enclume (2) jouxte la partie amont du tapis de transfert télescopique (5) en position rétractée.

3. Dispositif de coupe et de transfert selon l'une des revendications 1 ou 2, dans lequel, la lame de coupe (3) circule en suivant sensiblement la ligne de contact entre les deux demi-enclumes (1 et 2), lorsque les deux demi-enclumes sont en contact l'une de l'autre.

4. Dispositif de coupe et de transfert selon l'une des revendications 1 à 3, dans lequel le transporteur (4) est mobile selon l'axe longitudinal (Y'Y) entre une première position située sensiblement au-dessus de la première demi-enclume (1), et une position située sensiblement au-dessus de la surface de réception (6).

5. Dispositif de coupe et de transfert selon l'une des revendications 1 à 4, dans lequel les moyens de maintien des demi-enclumes (1 et 2) et du transporteur (4) comprennent des moyens électromagnétiques ou à aimantation pilotée, ou des éléments à dépression.

6. Dispositif de coupe et de transfert selon l'une des revendications 1 à 5, dans lequel la partie du tapis télescopique destinée à recevoir la bande (B) ou le tronçon de bande (T) circule sur une table support télescopique (56).

7. Dispositif de coupe et de transfert selon l'une des revendications 1 à 6, dans lequel le transporteur (4) est mobile dans une direction (ZZ') perpendiculaire au plan du tapis de transfert (OXY).

8. Procédé de coupe et de transfert d'un tronçon de bande (T) prélevé dans une bande continue (B) depuis des moyens de coupe (3) vers une surface de réception rotative (6) sur laquelle sont assemblés les divers composants formant un pneumatique, dans lequel on maintient les fronts avant (T_{f}) et arrière (Tᵣ) du tronçon de bande (T) dans la position dans laquelle ils sont disposés dans la bande continue (B) pendant l'ensemble des étapes allant de l'étape de coupe au cours de laquelle on prélève ledit tronçon de bande (T), jusqu'à la dépose complète dudit tronçon de bande (T) sur la surface de réception, et dans lequel on utilise un dispositif selon l'une des revendications 1 à 7.

9. Procédé de coupe et de transfert selon la revendication 8, comprenant les étapes au cours desquelles, à chaque cycle :
- on amène les deux demi-enclumes (1, 2) en contact l'une avec l'autre, et on ramène la surface porteuse du tapis télescopique à sa longueur maximale de sorte que la partie amont dudit tapis de transfert télescopique (5) jouxte la dite seconde demi-enclume (2),
- à l'aide du transporteur (4), on saisit le front avant (T_{f}) de la bande continue (B) par sa seconde face (T₂),
- on libère les moyens de maintien de la première demi-enclume (1) tenant le front avant (T_{f}) de la bande continue (B),
- tout en maintenant le front avant (T_{f}) de la bande (B) à l'aide du transporteur (4), on déroule la bande continue dans le sens longitudinal (Y'Y) sur une longueur déterminée, en la déposant sur la surface porteuse du tapis télescopique (5), tout en faisant progresser le transporteur (4) et le tapis télescopique (5) à la même vitesse linéaire,
- on saisit la première face (T₁) de la bande à l'aide des deux demi-enclumes (1, 2),
- on découpe la bande pour libérer un tronçon de bande (T),
- puis, tout en synchronisant la vitesse longitudinale du tapis de transfert (5) et de la seconde demi-enclume (2) avec la vitesse circonférentielle de la surface de réception (6), et en réduisant la longueur de la surface porteuse du tapis télescopique de manière à autoriser l'avance de la seconde demi-enclume (2), on fait progresser le tronçon de bande (T) sur le tapis télescopique en maintenant le front arrière (Tᵣ) dudit tronçon par sa première face (T₁) à l'aide de la seconde demi-enclume (2), et le front avant (T_{f}) dudit tronçon (T) par sa seconde face (T₂) à l'aide du transporteur (4),
- on approche le front avant (T_{f}) dudit tronçon de bande (T) de la surface de réception, et on le dépose sur ladite surface de réception (6),
- après avoir ancré ledit font avant (T_{f}) sur la surface de réception (6), on libère les moyens de saisie du transporteur (4), et on enroule le tronçon de bande (T) autour de la surface de réception (6),
- on ramène le transporteur (4) à la hauteur du front arrière (Tᵣ) dudit tronçon de bande (T),
- à l'aide du transporteur (4), on saisit le front arrière (Tᵣ) du tronçon de bande (T) par sa seconde face (T₂), et on libère les moyens de maintien de la seconde demi-enclume (2),
- on dépose le front arrière du tronçon de bande sur la surface de réception (6),
- après avoir ancré le front arrière (Tᵣ) du tronçon de bande (T) sur la surface de réception (6), on libère les moyens de maintien du transporteur (4), et
- on ramène ledit transporteur (4) et la seconde demi-enclume (2) à la hauteur de la première demi-enclume (1).

## Patentansprüche

1. Vorrichtung zum Schneiden und Transferieren eines Bahnabschnitts (T), der einer kontinuierlichen Bahn (B) entnommen ist, der eine erste (T₁) und eine zweite (T₂) Fläche umfasst, und der dazu bestimmt ist, über einer sich drehenden Aufnahmefläche (6) aufgebracht zu werden, auf der verschiedene Komponenten montiert sind, die einen Reifen bilden, umfassend
- ein Schneidemittel (3), das geeignet ist, den Abschnitt von der kontinuierlichen Bahn gemäß einer Schnittlinie (LC) zu trennen,
- einen teleskopartigen Transferteppich (5), der in einer Längsrichtung (Y'Y) zwischen den Schneidemitteln und der Aufnahmefläche angeordnet und dazu bestimmt ist, den Bahnabschnitt durch seine erste Fläche (T₁) aufzunehmen,
- einen ersten Halbamboss (1), der stromaufwärts von der Schnittlinie (LC) angeordnet ist und Haltemittel umfasst, die geeignet sind, die Bahn durch ihre erste Fläche (T₁) zu ergreifen,
- einen Förderer (4), der über Haltemittel verfügt, die geeignet sind, das vordere (T_{f}) oder hintere (Tᵣ) Ende des Bahnabschnitts (T) durch die zweite Fläche (T₂) zu ergreifen, wobei der Förderer (4) parallel in der Längsrichtung (Y'Y) mitgeführt wird,
**dadurch gekennzeichnet, dass** diese einen zweiten Halbamboss (2) umfasst, der dazu bestimmt ist, mit dem ersten Halbamboss (1) während des Schneidens der Bahn zusammenzuwirken, der stromabwärts von der Schnittlinie (LC) und stromaufwärts von dem teleskopartigen Transferteppich (5) angeordnet ist, der Haltemittel umfasst, die geeignet sind, das hintere (Tᵣ) Ende des Bahnabschnitts durch die erste Fläche (T₁) zu ergreifen, und der parallel in der Längsrichtung (Y'Y) mitgeführt wird.

2. Vorrichtung zum Schneiden und Transferieren nach Anspruch 1, wobei der zweite Halbamboss (2) bewegbar ist zwischen einer Position, in der die beiden Halbambosse (1 und 2) miteinander in Kontakt stehen, und einer Position, in der der zweite Halbamboss (2) an dem stromaufwärtigen Teil des teleskopartigen Transferteppichs (5) in zurückgezogener Position anliegt.

3. Vorrichtung zum Schneiden und Transferieren nach einem der Ansprüche 1 oder 2, wobei sich die Schnittklinge (3) bewegt, indem sie der Kontaktlinie zwischen den beiden Halbambossen (1 und 2) im Wesentlichen folgt, wenn die beiden Halbambosse miteinander in Kontakt stehen.

4. Vorrichtung zum Schneiden und Transferieren nach einem der Ansprüche 1 bis 3, wobei der Förderer (4) gemäß der Längsachse (Y'Y) bewegbar ist zwischen einer ersten Position, die im Wesentlichen über dem ersten Halbamboss (1) angeordnet ist, und einer Position, die im Wesentlichen über der Aufnahmefläche (6) angeordnet ist.

5. Vorrichtung zum Schneiden und Transferieren nach einem der Ansprüche 1 bis 4, wobei die Haltemittel der Halbambosse (1 und 2) und des Förderers (4) elektromagnetische Mittel oder Mittel mit gesteuerter Magnetisierung oder Druckelemente umfassen.

6. Vorrichtung zum Schneiden und Transferieren nach einem der Ansprüche 1 bis 5, wobei der Teil des teleskopartigen Teppichs, der dazu bestimmt ist, die Bahn (B) oder den Bahnabschnitt (T) aufzunehmen, um einen teleskopartigen Trägertisch (56) läuft.

7. Vorrichtung zum Schneiden und Transferieren nach einem der Ansprüche 1 bis 6, wobei der Förderer (4) in einer Richtung (ZZ') rechtwinklig zu der Ebene des Transferteppichs (OXY) bewegbar ist.

8. Verfahren zum Schneiden und Transferieren eines Bahnabschnitts (T), der einer kontinuierlichen Bahn (B) entnommen wird, mit Schneidemitteln (3) in Richtung einer sich drehenden Aufnahmefläche (6), auf der verschiedene Komponenten montiert sind, die einen Reifen bilden, wobei das vordere (T_{f}) und das hintere (Tᵣ) Ende des Bahnabschnitts (T) in der Position, in der sie in der kontinuierlichen Bahn (B) angeordnet sind, während aller Schritte gehalten werden, von dem Schneideschritt, während welchen Schritts der Bahnabschnitt (T) entnommen wird, bis zum vollständigen Aufbringen des Bahnabschnitts (T) auf der Aufnahmefläche, und wobei eine Vorrichtung nach einem der Ansprüche 1 bis 7 verwendet wird.

9. Verfahren zum Schneiden und Transferieren nach Anspruch 8, umfassend die folgenden Schritte, während welcher Schritte in jedem Zyklus:
- die beiden Halbambosse (1, 2) miteinander in Kontakt gebracht werden, und die Trägerfläche des teleskopartigen Teppichs derart in ihre maximale Länge zurückgebracht wird, dass der stromaufwärtige Teil des teleskopartigen Transferteppichs (5) an dem zweiten Halbamboss (2) anliegt,
- mit Hilfe des Förderers (4) das vordere Ende (T_{f}) der kontinuierlichen Bahn (B) durch ihre zweite Fläche (T₂) ergriffen wird,
- die Haltemittel des ersten Halbambosses (1) gelöst werden, die das vordere Ende (T_{f}) der kontinuierlichen Bahn (B) halten,
- indem gleichzeitig das vordere Ende (T_{f}) der Bahn (B) mit Hilfe des Förderers (4) gehalten wird, die kontinuierliche Bahn in der Längsrichtung (Y'Y) auf eine bestimmte Länge abgerollt wird, indem sie über der Trägerfläche des teleskopartigen Teppichs (5) aufgebracht wird, wobei der Förderer (4) und der teleskopartige Teppich (5) mit derselben linearen Geschwindigkeit weitergeführt werden,
- die erste Fläche (T₁) der Bahn mit Hilfe der beiden Halbambosse (1, 2) ergriffen wird,
- die Bahn geschnitten wird, um einen Bahnabschnitt (T) freizugeben,
- dann, indem gleichzeitig die longitudinale Geschwindigkeit des Transferteppichs (5) und des zweiten Halbambosses (2) mit der Umfangsgeschwindigkeit der Aufnahmefläche (6) synchronisiert wird, und indem die Länge der Trägerfläche des teleskopartigen Teppichs derart verringert wird, dass das Vorschieben des zweiten Halbambosses (2) gestattet wird, der Bahnabschnitt (T) auf dem teleskopartigen Teppich weitergeführt wird, indem das hintere Ende (Tᵣ) des Abschnitts durch seine erste Fläche (T₁) mit Hilfe des zweiten Halbambosses (2) und das vordere Ende (T_{f}) des Abschnitts (T) durch seine zweite Fläche (T₂) mit Hilfe des Förderers (4) gehalten wird,
- das vordere Ende (T_{f}) des Bahnabschnitts (T) der Aufnahmefläche angenähert wird, und dieses auf die Aufnahmefläche (6) gelegt wird,
- nachdem das vordere Ende (T_{f}) auf der Aufnahmefläche (6) verankert wurde, die Erfassungsmittel des Förderers (4) gelöst werden und der Bahnabschnitt (T) rund um die Aufnahmefläche (6) abgerollt wird,
- der Förderer (4) auf die Höhe des hinteren Endes (Tᵣ) des Bahnabschnitts (T) zurückgeführt wird,
- mit Hilfe des Förderers (4) das hintere Ende (Tᵣ) des Bahnabschnitts (T) durch seine zweite Fläche (T₂) ergriffen wird und die Haltemittel des zweiten Halbambosses (2) gelöst werden,
- das hintere Ende des Bahnabschnitts auf die Aufnahmefläche (6) gelegt wird,
- nachdem das hintere Ende (Tᵣ) des Bahnabschnitts (T) auf der Aufnahmefläche (6) verankert wurde, die Haltemittel des Förderers (4) gelöst werden, und
- der Förderer (4) und der zweite Halbamboss (2) auf die Höhe des ersten Halbambosses (1) zurückgeführt werden.

## Claims

1. Device for cutting and transferring a length of strip (T) let off a continuous strip (B), comprising a first face (T₁) and a second face (T₂) and intended to be laid on a rotary receiving surface (6) on which the various components that make up a tyre are assembled, and comprising
- a cutting means (3) able to separate the said length from the continuous strip along a cutting line (LC),
- a telescopic conveyor belt (5), arranged in a longitudinal direction (Y'Y) between the cutting means and the receiving surface, and intended to receive the length of strip via the first face (T₁) thereof,
- a first half-anvil (1), arranged upstream of the cutting line (LC), and comprising holding means able to grasp the strip via the first face (T₁) thereof,
- a transporter (4), having holding means able to grasp the front edge (T_{f}) or rear edge (Tᵣ) of the length of strip (T) via the second face (T₂), the said transporter (4) being translationally driven in the longitudinal direction (Y'Y),
**characterized in that** it comprises a second half-anvil (2) intended to collaborate with the first half-anvil (1) during the cutting of the strip, and positioned downstream of the cutting line (LC) and upstream of the telescopic conveyor belt (5), comprising holding means able to grasp the rear edge (Tᵣ) of the length of strip via the said first face (T₁), and translationally driven in the longitudinal direction (Y'Y).

2. Cutting and transfer device according to Claim 1, in which the second half-anvil (2) is able to move between a position in which the two half-anvils (1 and 2) are in contact with one another, and a position in which the second half-anvil (2) adjoins the upstream part of the telescopic conveyor belt (5) in the retracted position.

3. Cutting and transfer device according to either of Claims 1 and 2, in which the cutting blade (3) runs substantially along the line of contact between the two half-anvils (1 and 2) when the two half-anvils are in contact with one another.

4. Cutting and transfer device according to one of Claims 1 to 3, in which the transporter (4) is able to move along the longitudinal axis (Y'Y) between a first position situated substantially above the first half-anvil (1), and a position situated substantially above the receiving surface (6).

5. Cutting and transfer device according to one of Claims 1 to 4, in which the holding means of the half-anvils (1 and 2) and of the transporter (4) comprise electromagnetic or controlled-magnetization means, or suction elements.

6. Cutting and transfer device according to one of Claims 1 to 5, in which that part of the telescopic belt that is intended to receive the strip (B) or the length of strip (T) runs over a telescopic support table (56).

7. Cutting and transfer device according to one of Claims 1 to 6, in which the transporter (4) is able to move in a direction (ZZ') perpendicular to the plane of the conveyor belt (OXY).

8. Method for cutting and transferring a length of strip (T), let off a continuous strip (B), from cutting means (3) to a rotary receiving surface (6) on which the various components that make up a tyre are assembled, in which method the front edge (T_{f}) and rear edge (Tᵣ) of the length of strip (T) are held in the position in which they are arranged in the continuous strip (B) throughout all of the steps ranging from the cutting step during which the said length of strip (T) is let off, up to the completed laying of the said length of strip (T) on the receiving surface, and in which a device according to one of Claims 1 to 7 is used.

9. Cutting and transfer method according to Claim 8, comprising the steps during which, in each cycle:
- the two half-anvils (1, 2) are brought into contact with one another and the bearing surface of the telescopic belt is extended to its maximum length so that the upstream part of the said telescopic conveyor belt (5) adjoins the said second half-anvil (2),
- using the transporter (4), the front edge (T_{f}) of the continuous strip (B) is grasped via the second face (T₂) thereof,
- the holding means of the first half-anvil (1) holding the front edge (T_{f}) of the continuous strip (B) are released,
- while continuing to hold the front edge (T_{f}) of the strip (B) using the transporter (4), the continuous strip is let out in the longitudinal direction (Y'Y) over a determined length, laying it down on the bearing surface of the telescopic belt (5) while at the same time causing the transporter (4) and the telescopic belt (4) to progress at the same linear speed,
- the first face (T₁) of the strip is grasped using the two half-anvils (1, 2),
- the strip is cut to free a length of strip (T),
- then, keeping the longitudinal speed of the conveyor belt (5) and of the second half-anvil (2) synchronized with the circumferential speed of the receiving surface (6), and while reducing the length of the bearing surface of the telescopic belt so as to allow the second half-anvil (2) to advance, the length of strip (T) is progressed along the telescopic belt while holding the rear edge (Tᵣ) of the said length via the first face (T₁) thereof using the second half-anvil (2), and holding the front edge (T_{f}) of the said length (T) via the second face (T₂) thereof using the transporter (4),
- the front edge (T_{f}) of the said length of strip (T) is brought closer to the receiving surface and laid down on the said receiving surface (6),
- once the said front edge (T_{f}) has been anchored on the receiving surface (6), the grasping means of the transporter (4) are released and the length of strip (7) is wound around the receiving surface (6),
- the transporter (4) is returned to the level of the rear edge (Tᵣ) of the said length of strip (T),
- using the transporter (4), the rear edge (Tᵣ) of the length of strip (T) is grasped via the second face (T₂) thereof and the holding means of the second half-anvil (2) are released,
- the rear edge of the length of strip is laid down on the receiving surface (6),
- once the rear edge (Tᵣ) of the length of strip (T) has been anchored on the receiving surface (6), the holding means of the transporter (4) are released, and
- the said transporter (4) and the second half-anvil (2) are returned to the level of the first half-anvil (1).
